(19) Europäisches Patentamt / European Patent Office / Office européen des brevets

(11) **EP 3 972 103 B1**

(12) **EUROPEAN PATENT SPECIFICATION**

(45) Date of publication and mention of the grant of the patent:
**07.12.2022 Bulletin 2022/49**

(21) Application number: **21170561.1**

(22) Date of filing: **26.04.2021**

(51) International Patent Classification (IPC):
$H02M\ 1/32$ (2007.01)    $H02M\ 7/483$ (2007.01)
$H02J\ 3/36$ (2006.01)    $H02H\ 7/26$ (2006.01)

(52) Cooperative Patent Classification (CPC):
**H02M 1/32; H02H 7/268; H02J 3/36; H02M 7/4835;**
**Y02E 60/60**

(54) **FAULT CURRENT LIMITING METHOD IN COMBINATION WITH BRIDGE-ARM CURRENT SUPPRESSION FOR VSC-HVDC**

FEHLERSTROMBEGRENZUNGSVERFAHREN IN KOMBINATION MIT BRÜCKENARMSTROMUNTERDRÜCKUNG FÜR VSC-HVDC

PROCÉDÉ DE LIMITATION DE COURANT DE DÉFAUT EN COMBINAISON AVEC UNE SUPPRESSION DE COURANT DE BRAS DE PONTAGE POUR VSC-HVDC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.09.2020 CN 202010994020**

(43) Date of publication of application:
**23.03.2022 Bulletin 2022/12**

(73) Proprietor: **Sichuan University**
**Chengdu City, Sichuan 610065 (CN)**

(72) Inventors:
• **LI, Baohong**
  **Chengdu City, 610065 (CN)**
• **TAO, Yan**
  **Chengdu City, 610065 (CN)**
• **LIU, Tianqi**
  **Chengdu City, 610065 (CN)**

(74) Representative: **Petculescu, Ana-Maria**
**Bayramoglu Law Offices LLC Türkiye**
**Irtibat Ofisi, Mira Office, Kanuni Sultan Süleyman Boulevard, 5387. street**
**Beytepe, floor 12, no:50**
**06800 Cankaya, Ankara (TR)**

(56) References cited:
**CN-A- 109 245 582**

• **MA YUEYANG ET AL: "Novel fault current-limiting scheme for MMC-based flexible HVDC system", THE JOURNAL OF ENGINEERING, THE INSTITUTION OF ENGINEERING AND TECHNOLOGY, MICHAEL FARADAY HOUSE, SIX HILLS WAY, STEVENAGE, HERTS. SG1 2AY, UK, vol. 2019, no. 16, 1 March 2019 (2019-03-01), pages 2233-2238, XP006085278, DOI: 10.1049/JOE.2018.8871**
• **XIA LI ET AL: "Research on the Modeling of MMC-HVDC Considering the Fault Ride-through Characteristics", 2018 INTERNATIONAL CONFERENCE ON POWER SYSTEM TECHNOLOGY (POWERCON), IEEE, 6 November 2018 (2018-11-06), pages 1-5, XP033492261, DOI: 10.1109/POWERCON.2018.8602087 [retrieved on 2019-01-03]**

**Description**

**TECHNICAL FIELD**

The present invention relates to the field of control of voltage source converter-based high-voltage direct current transmission (VSC-HVDC) technology, and more particularly, to a fault current limiting method in combination with bridge-arm current suppression for VSC-HVDC.

**BACKGROUND**

VSC-HVDC is an effective technical approach for the asynchronous interconnection of modern power systems and the integration of renewable energy. In particular, the modular multilevel converter (MMC) is widely recognized as an inevitable choice for constructing direct current (DC) power grids due to its high-voltage and large-capacity transmission capacity. Compared with thyristors, however, the fully-controlled electronic devices in MMC are prone to damage due to overcurrent in the event of DC fault, which hinders the development of DC power grids.

To suppress the fault current, a common method is to endow the MMC with the ability to clear the fault current by changing the topology of sub-modules such as full-bridge sub-modules and clamp double sub-modules, synthesize the DC voltage to zero by locking the insulated gate bipolar transistors (IGBT) in the sub-module, and block the alternating current (AC) feed current to clear the fault current. However, to minimize the investment cost, prior projects typically employ half-bridge MMCs. For such DC systems, the DC circuit breaker (DCCB) is used as a conventional means to isolate the DC fault. However, with the improvement of the voltage level and transmission capacity of the DC system, the matching DC circuit breaker technology is not yet evolved. It is, therefore, highly desirable to conduct research on the DC fault current suppression measures.

Prior methods for fault current suppression mainly include: combined fault current limiting equipment (Eryong GUAN, Xinzhou DONG, Hao WANG, *Study on Combined Fault Current Limiting Equipment and Operation Strategy for DC Grid*, Proceedings of the Chinese Society for Electrical Engineering), in which the combined fault current limiting equipment is a combination of DC current limiter and flexible DC converter with the ability of fault current clearance; a novel hybrid DC fault current limiter topology (Naizheng HAN, Xiufang JIA, Xibei ZHAO, Jianzhong XU, Chengyong ZHAO, *Novel Hybrid DC Fault Current Limiter Topology*, Proceedings of the Chinese Society for Electrical Engineering), in which the main current limiting circuit employs thyristor devices to quickly bypass the current limiting inductor when the DC circuit breaker breaks the circuit; the above two measures require additional installation of fault current suppression devices, which increases the engineering investment costs; a modular multilevel converter with DC fault current limiting capability (Ruixiang HAO, Xiaofeng YANG, Yao XUE, Bowei CHEN, Zhiqin LIN, Hu SUN, *Modular Multilevel Converter with DC Fault Current Limiting Capability*, Transactions of China Electrotechnical Society), in which the fault current is limited by an extra blocking IGBT device together with its bypass snubber circuit arranged in the AC output port; in this suppression mode, the improved sub-module topology adds the IGBT device and its bypass snubber circuit, increases the equipment investment costs, and thus cannot be satisfactorily applied to the existing projects; a fault current limiting control strategy based on virtual reactor (Li X, Li Z, Zhao B, et al. HVDC Reactor Reduction Method Based on Virtual Reactor Fault Current Limiting Control of MMC. IEEE Transactions on Industrial Electronics, 2019), in which the inductance of the virtual reactor can be directly controlled by the discharge degree of sub-module capacitors to realize the purpose of limiting the fault current; an adaptive fault current limiting control strategy (Ni B, Xiang W, Zhou M, et al. An Adaptive Fault Current Limiting Control for MMC and Its Application in DC Grid. IEEE Transactions on Power Delivery, 2020), in which the current can be limited by adaptively altering the inserted number of sub-modules; the last two methods only consider the suppression of the DC fault current, but do not consider the suppression of the bridge-arm current, and thus cannot guarantee that the power transmission of the converter station will not be interrupted during the fault.

CN 109 245 582 A discloses a DC short-circuit fault current clearing method for a hybrid modular multi-level converter. The method o is not to lock the converter in the process of clearing the DC short circuit fault, Instead, the hybrid modularized multilevel converter is kept in operation state, and the negative output voltage of the hybrid modularized multilevel converter is controlled to actively control DC fault current to zero by utilizing the negative output capacity of the full-bridge sub-module in the process of clearing the DC short-circuit fault current. A hybrid modular multilevel converter can directly transmit the energy stored in the DC line to the AC power network in the process of clearing the DC short-circuit fault current, It can reduce the voltage stress requirements of switching devices and DC capacitors, improve the safety and reliability of operation, and is especially suitable for long-distance overhead line HVDC transmission applications

Ma Yueyang et. al "Novel fault current-limiting scheme for MMC-basedflexible HVDC system", The Journal of Engineering, The Institution of Engineering and Technology, Michael Faraday Hous, UK, vol 2019, no 16, 1 March 2019, pages 2233-2238 discloses a novel fault current-limiting scheme for MMC-based flexible HVC systems which consists of a current-limiting resistance and dozens of serial controllable power electronics in parallel with the current-limiting resistance.

## SUMMARY

The technical problem to be solved by the present invention is to provide a fault current limiting method and a bridge-arm current suppression for VSC-HVDC, aimed at realizing the purpose of limiting the DC fault current, and reducing the requirement for the breaking capacity of the DC circuit breaker, while also preventing the converter from being blocked before the action of the DC circuit breaker to ensure that the transmission of the active power will not be interrupted during the fault.

In order to solve the above-mentioned technical problems, the present invention adopts the technical solution defined by the independent method claim 1, in particular, a fault current limiting method and a bridge-arm current suppression for VSC-HVDC includes the following steps:

step 1: extracting an equivalent inductance $L_{eq}$ and an equivalent capacitance $C_{eq}$ of a converter, an inductance value $L_d$ of a DC smoothing reactor, a rated DC voltage $U_{dcN}$, a proportional parameter $k_p$ and an integral parameter $k_i$ of a current inner loop proportional-integral (PI) controller, a DC current real-time value $i_{dc}$, and a DC current reference value $i_{dcref}$,

step 2: setting a corner frequency $f_z$ of DC current suppression control according to a fault current suppression

$$K_c = \frac{1}{\left[ (i_{dc} - i_{dcref}) \cdot \left( sT_a + 1 + \frac{1}{sT_b} \right) \right] \Big/ (i_{dc} - i_{dcref})}$$

requirement, and calculating a switching coefficient                                                        of the converter,

where $T_a = \frac{1}{2\pi f_z}$ , $T_b = 2\pi f_z C_{eq} L_{dc}$, $L_{dc} = L_{eq} + 2L_d$, $T_a$ is a differential coefficient, s is a Laplace operator, $T_b$ is an integral coefficient, and $L_{dc}$ is an integrated inductance;

step 3: in an inner loop current control stage, adding the bridge-arm current suppression control to a reference current input point of a d axis, wherein a time constant of the bridge-arm current suppression control is $T_d = \frac{k_p}{k_i}$ , where $k_p$ and $k_i$ are parameters of the inner loop PI controller, respectively;

step 4: unlocking a converter station to enable a VSC-HVDC system to operate stably;

step 5: setting a DC pole-to-pole fault to occur; when a rising rate of the DC current is detected to exceed $U_{dcN}/2L_{dc}$, triggering the DC suppression control, and changing the initial switching coefficient of the converter to the calculated adaptive switching coefficient $K_c$; meanwhile, adding the bridge-arm current suppression control to reduce a bridge-arm current by suppressing an AC current component; after a delay, breaking a fault current by a DC circuit breaker and isolating the fault; and after the fault is isolated, exiting operation of the two controls; and

step 6: after a predetermined deionization time, reclosing the DC circuit breaker to enable the system to resume operation.

Further, in step 6, the predetermined deionization time is 200 ms-300 ms.

Compared with the prior art, the present invention has the following advantages. The DC impedance is reshaped by adaptively changing the switching coefficient of the converter, so as to realize the purpose of limiting the DC fault current while reducing the requirement for the breaking capacity of the DC circuit breaker. In addition, the bridge-arm current suppression control is added to the current inner loop to reduce the bridge-arm current to prevent the converter from being blocked before the action of the DC circuit breaker. Compared with the prior methods, the present invention does not need to invest extra equipment, and adds a bridge-arm current suppression mode to ensure that the transmission of the active power will not be interrupted during the fault, thereby improving the reliability of operation of the DC system.

## BRIEF DESCRIPTION OF THE DRAWINGS

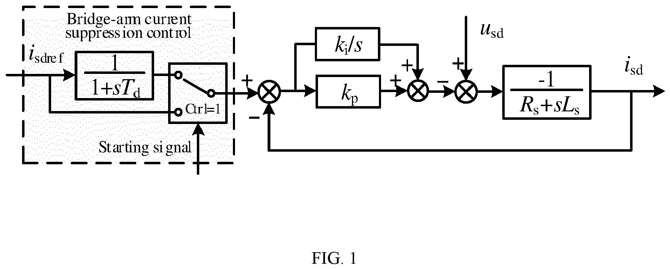

FIG. 1 is a schematic diagram of a method with the bridge-arm current suppression.

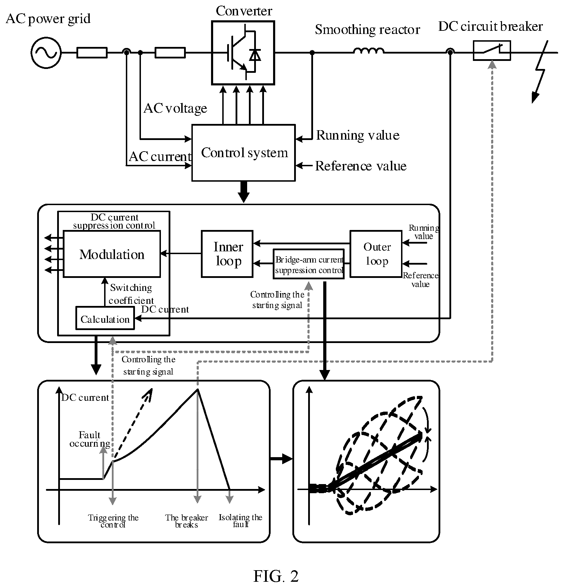

FIG. 2 is a schematic diagram of the cooperation between the combined suppression control of the fault current and the DC circuit breaker.
FIG. 3 is a schematic diagram of VSC-HVDC systems at both ends.

FIG. 4 is a graph showing simulation verification of a fault current without control and with the fault current suppression.
FIG. 5 is a waveform diagram of bridge-arm currents after adding the bridge-arm current suppression control under different parameters, wherein $f_z$=72Hz.
FIG. 6 is a waveform diagram of bridge-arm currents after adding the bridge-arm current suppression control under different parameters, wherein $f_z$=41Hz.
FIG. 7 is a waveform diagram of bridge-arm currents after adding the bridge-arm current suppression control under different parameters, wherein $f_z$=22.5Hz.

## DETAILED DESCRIPTION OF THE EMBODIMENTS

The present invention is further explained in detail below with reference to the drawings and specific embodiments. The present invention provides a fault current limiting method in combination with the bridge-arm current suppression for VSC-HVDC, which includes:

1. The equivalent resistance $R_{eq}$, the equivalent inductance $L_{eq}$ and the equivalent capacitance $C_{eq}$ of the converter, the inductance value $L_d$ of the DC smoothing reactor, the rated DC voltage $U_{dcN}$, the proportional parameter $k_p$ and the integral parameter $k_i$ of the current inner loop proportional-integral (PI) controller, the DC current real-time value $i_{dc}$, and the DC current reference value $i_{dcref}$ are extracted.

2. The corner frequency $f_z$ of the DC current suppression control is set according to the fault current suppression requirement, and the switching coefficient

$$K_c = \frac{1}{\left[ (i_{dc} - i_{dcref}) \cdot \left( sT_a + 1 + \frac{1}{sT_b} \right) \right] \Big/ (i_{dc} - i_{dcref})}$$

of the converter is calculated, where $T_a = \frac{1}{2\pi f_z}$ , $T_b = 2\pi f_z C_{eq} L_{dc}$, $L_{dc} = L_{eq} + 2L_d$, $T_a$ is a differential coefficient, s is a Laplace operator, $T_b$ is an integral coefficient, and $L_{dc}$ is an integrated inductance.

3. In the inner loop current control stage, the bridge-arm current suppression control is added to the reference current input point of the d axis, wherein the time constant of the bridge-arm current suppression control is $T_d = \frac{k_p}{k_i}$ , where $k_p$ and $k_i$ are parameters of the inner loop PI controller, respectively.

4. The converter station is unlocked to enable the VSC-HVDC system to operate stably.

5. The DC pole-to-pole fault is set to occur. When it is detected that the rising rate of the DC current exceeds $U_{dcN}/2L_{dc}$, the DC suppression control is triggered, and the initial switching coefficient of the converter is changed to the calculated adaptive switching coefficient $K_c$, to achieve the effect of bypassing parts of sub-modules to reduce the DC fault current. Meanwhile, the bridge-arm current suppression control is added to reduce the bridge-arm current by suppressing the AC current component. After a delay of 6 ms, the DC circuit breaker breaks the fault current, and isolates the fault. After the fault is isolated, the two controls exit operation.

6. After a deionization time of 200 ms-300 ms, the DC circuit breaker is reclosed to enable the system to resume operation.

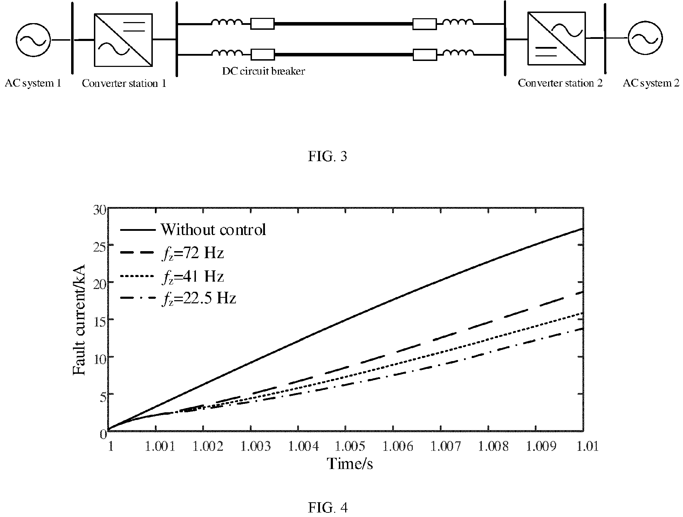

Taking the VSC-HVDC systems at both ends in FIG. 3 as an example to verify the effectiveness of the method of the present invention as follows.

Verification scheme 1: DC fault current suppression control

The control parameters are set as shown in Table 1:

Table 1 Control parameters of Verification scheme 1

| $f_z$ | $T_a$ | $T_b$ |
|---|---|---|
| 72 Hz | 0.0022 s | 0.0595 s |
| 41 Hz | 0.0039 s | 0.0339 s |
| 22.5 Hz | 0.0071 s | 0.0186 s |

Under the three groups of different parameters in Table 1, the value of the fault current at 6 ms can be reduced by 40%, 49.4% and 57%, respectively. The simulation verification is shown in FIG. 4. Compared with the fault current without the control, the control method of the present invention achieves a remarkable effect in fault current suppression.

Verification scheme 2: bridge-arm current suppression control

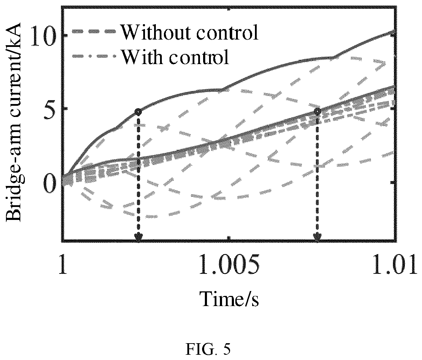

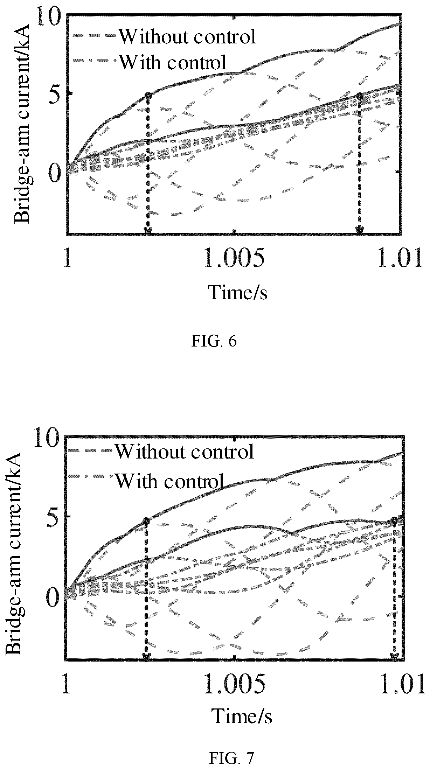

FIGS. 5-7 respectively show the waveforms of the bridge-arm current after the bridge-arm current suppression control is added under the three groups of different parameters in Table 1. The effect of extending the blocking time of the converter station is shown in Table 2.

Table 2 Bridge-arm current suppression effect under different control parameters

| $f_z$ | blocking time of converter station | | Percentage of extending of the blocking time |
|---|---|---|---|
| | Without bridge-arm current suppression control | With bridge-arm current suppression control | |
| 72 Hz | 2.30 ms | 7.60 ms | 230% |
| 41 Hz | 2.40 ms | 8.65 ms | 260% |
| 22.5 Hz | 2.50 ms | 9.80 ms | 292% |

It can be seen that the control method of the present invention can effectively reduce the bridge-arm current and ensure that the converter is not blocked before the DC circuit breaker breaks.

**Claims**

1. A method for fault current limiting and bridge-arm current suppression for VSC-HVDC, comprising the following step:

   step 1: extracting an equivalent inductance $L_{eq}$ and an equivalent capacitance $C_{eq}$ of a converter, an inductance value $L_d$ of a DC smoothing reactor, a rated DC voltage $U_{dcN}$, a proportional parameter $k_p$ and an integral parameter $k_i$ of a current inner loop PI controller, a DC current real-time value $i_{dc}$, and a DC current reference value $i_{dcref}$;
   **characterized in that** it further comprises the following steps:

   step 2: setting a corner frequency $f_z$ of a DC current suppression control according to a fault current suppression requirement, and calculating a switching coefficient

   $$K_c = \cfrac{1}{\left[ (i_{dc} - i_{dcref}) \cdot \left( sT_a + 1 + \cfrac{1}{sT_b} \right) \right] \bigg/ (i_{dc} - i_{dcref})}$$

   of the converter, where $T_a = \dfrac{1}{2\pi f_z}$, $T_b = 2\pi f_z C_{eq} L_{dc}$, $L_{dc} = L_{eq} + 2L_d$, $T_a$ is a differential coefficient, s is a Laplace operator, $T_b$ is an integral coefficient, and $L_{dc}$ is an integrated inductance;
   step 3: in an inner loop current control stage, adding a bridge-arm current suppression control to a reference current input point of a d axis, wherein a time constant of the bridge-arm current suppression control is $T_d = \dfrac{k_p}{k_i}$, where $k_p$ and $k_i$ are parameters of the inner loop PI controller, respectively;
   step 4: unlocking a converter station to enable a VSC-HVDC system to operate stably;
   step 5: setting a DC pole-to-pole fault to occur; when a rising rate of a DC current is detected to exceed $U_{dcN}/2L_{dc}$, triggering the DC suppression control, and changing the initial switching coefficient of the converter to a calculated adaptive switching coefficient $K_c$; meanwhile, adding the bridge-arm current suppression control to reduce a bridge-arm current by suppressing an AC current component; after a delay, breaking a fault current by a DC circuit breaker and isolating the fault; and after the fault is isolated, exiting operation of the two controls; and
   step 6: after a predetermined deionization time, reclosing the DC circuit breaker to enable the system to resume operation.

2. The fault current limiting and bridge-arm current suppression method for VSC-HVDC, according to claim 1, **characterized in that**, in step 6, the predetermined deionization time is 200 ms-300 ms.

**Patentansprüche**

1. Verfahren zur Fehlerstrombegrenzung und Brückenzweigstromunterbrechung für VSC-HVDC, folgenden Schritt umfassend:

Schritt 1: Extrahieren einer äquivalenten Induktanz $L_{eq}$ und einer äquivalenten Kapazität $C_{eq}$ eines Wandlers, eines Induktanzwerts $L_d$ eines DC-Glättungsreaktors, einer DC-Bemessungsspannung $U_{dcN}$, eines proportionalen Parameters $k_p$ und eines Integralparameters $k_i$ einer Strominnenschleifen-PI-Steuereinrichtung, eines DC-Strom-Echtzeitwerts $i_{dc}$ und eines DC-Strom-Referenzwerts $i_{dcref}$;
**dadurch gekennzeichnet, dass** es ferner die folgenden Schritte umfasst:

Schritt 2: Einstellen einer Eckfrequenz $f_z$ einer DC-Stromunterdrückungssteuerung gemäß einer Anforderung zur Fehlerstromunterdrückung und Berechnen eines Umschaltkoeffizienten

$$K_c = \frac{1}{\left[\left(i_{dc} - i_{dcref}\right) \cdot \left(sT_a \div 1 + \frac{1}{sT_b}\right)\right] / \left(i_{dc} - i_{dcref}\right)}$$

des Wandlers, wobei $T_a = \frac{1}{2\pi f_z}$, $T_b = 2\pi f_z C_{eq} L_{dc}$, $L_{dc} = L_{eq} + 2L_d$, $T_a$ ein Differenzialkoeffizient ist, s ein Laplace-Operator ist, $T_b$ ein Integralkoeffizient ist und $L_{dc}$ eine integrierte Induktanz ist;
Schritt 3: auf einer Innenschleifenstromsteuerungsstufe Hinzufügen einer Brückenzweigstromunterdrückungssteuerung zu einem Referenzstromeingangspunkt einer J-Achse, wobei eine Zeitkonstante der Brückenzweigstromunterdrückungssteuerung $T_d = \frac{k_P}{k_i}$ ist, wobei $k_p$ und $k_i$ jeweils Parameter der Innenschleifen-PI-Steuereinrichtung sind;
Schritt 4: Entsperren einer Wandlerstation zum Ermöglichen eines stabilen Betriebs eines VSC-HVDC-Systems;
Schritt 5: Einstellen des Auftretens eines DC-Pol-zu-Pol-Fehlers; wenn eine Anstiegsrate eines DC-Stroms von über $U_{dcN}/2L_{dc}$ erkannt wird, Auslösen der DC-Unterdrückungssteuerung und Ändern des anfänglichen Umschaltkoeffizienten des Wandlers auf einen berechneten adaptiven Umschaltkoeffizienten $K_c$; dabei Hinzufügen der Brückenzweigstromunterdrückungssteuerung zum Reduzieren eines Brückenzweigstroms durch Unterdrücken einer AC-Stromkomponente; nach einer Verzögerung Unterbrechen eines Fehlerstroms durch einen DC-Trennschalter und Isolieren des Fehlers; und nach dem Isolierendes Fehlers Beenden des Betriebs der zwei Steuerung; und
Schritt 6: nach einer vorgegebenen Deionisierungszeit erneutes Schließen des DC-Trennschalters, damit das System den Betrieb wieder aufnehmen kann.

2. Verfahren zur Fehlerstrombegrenzung und Brückenzweigstromunterbrechung für VSC-HVDC nach Anspruch 1, **dadurch gekennzeichnet, dass** in Schritt 6 die vorgegebene Deionisierungszeit 200 ms bis 300 ms beträgt.

**Revendications**

1. Un procédé pour limitation de courant de défaut et suppression de courant de bras de pont pour VSC-HVDC (transmission de courant direct haute tension basée sur convertisseur de source de tension), comprenant les étapes suivantes :

étape 1 : extraction d'une inductance équivalente $L_{eq}$ et d'une capacité équivalente $C_{eq}$ d'un convertisseur, d'une valeur d'inductance $L_d$ d'une réactance de lissage CC, d'une tension nominale CC $U_{dcN}$, d'un paramètre proportionnel $k_p$ et d'un paramètre intégral $k_i$ d'un contrôleur PI de boucle interne de courant, d'une valeur en temps réel de courant CC $i_{dc}$, et d'une valeur de référence de courant CC $i_{dcref}$ ;
**caractérisé en ce qu'**il comprend en outre les étapes suivantes :

étape 2 : définir une fréquence de coupure $f_z$ d'un contrôle de suppression de courant CC selon des exigences de suppression de courant de défaut, et calculer un coefficient de commutation

$$K_c = \cfrac{1}{\left[(i_{dc} - i_{dcref}) \cdot \left(sT_a + 1 + \dfrac{1}{sT_b}\right)\right] \Big/ (i_{dc} - i_{dcref})}$$

du convertisseur, où $T_a = \dfrac{1}{2\pi f_z}$ , $T_b = 2\pi f_z C_{eq} L_{dc}$, $L_{dc} = L_{eq} + 2L_d$, $T_a$ est un coefficient différentiel, s est un opérateur laplacien, $T_b$ est un coefficient intégral, et $L_{dc}$ est une inductance intégrée ;

étape 3 : dans une phase de contrôle de courant de boucle interne, ajouter un contrôle de suppression de courant de bras de pont à un point d'entrée de courant de référence d'un axe J, dans lequel une constante de temps du contrôle de suppression de courant de bras de pont est $T_d = \dfrac{k_p}{k_i}$ , où $k_p$ et $k_i$ sont des paramètres du contrôleur PI de boucle interne de courant, respectivement ;

étape 4 : déverrouiller une station de convertisseur pour permettre à un système VSC-HVDC de fonctionner de façon stable ;

étape 5 : définir une défaillance susceptible de se produire entre pôles CC déclenchant le contrôle de suppression CC lorsqu'une vitesse montante de courant CC dépassant $U_{dcN}/2L_{dc}$ est détectée, et modifiant le coefficient initial de commutation du convertisseur pour calculer un coefficient de commutation adaptatif $K_c$ ; parallèlement, ajouter le contrôle de suppression de courant de bras de pont pour réduire le courant de bras de pont en supprimant un composant de courant CA ; après un délais, couper un courant de défaut à l'aide d'un disjoncteur CC et isoler le défaut ; une fois que le défaut est isolé, mettre fin au deux contrôles ; et

étape 6 : après une durée de désionisation prédéterminée, refermer le disjoncteur CC afin de permettre au système de reprendre son fonctionnement.

2. Un procédé pour limitation de courant de défaut et suppression de courant de bras de pont pour VSC-HVDC selon la revendication 1, **caractérisé en ce que**, à l'étape 6, la durée de désionisation prédéterminée est de 200 ms-300 ms.

FIG. 1

FIG. 2

FIG. 3

FIG. 4

FIG. 5

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109245582 A

**Non-patent literature cited in the description**

- **LI X ; LI Z ; ZHAO B et al.** HVDC Reactor Reduction Method Based on Virtual Reactor Fault Current Limiting Control of MMC. *IEEE Transactions on Industrial Electronics,* 2019
- **NI B ; XIANG W ; ZHOU M et al.** An Adaptive Fault Current Limiting Control for MMC and Its Application in DC Grid. *IEEE Transactions on Power Delivery,* 2020

- Novel fault current-limiting scheme for MMC-based-flexible HVDC system. **MA YUEYANG.** The Journal of Engineering. The Institution of Engineering and Technology, 01 March 2019, vol. 2019, 2233-2238